# EUROPEAN PATENT APPLICATION

(11) **EP 3 333 040 A1**
(43) Date of publication of application: **13.06.2018**
(21) Application number: 16832597.5
(22) Date of filing: 02.06.2016
(51) Int. Cl.: B61F 5/24, F16F 15/02

(54) **VIBRATION SUPPRESSION DEVICE FOR RAILCAR**

(30) Priority: 03.08.2015 JP 2015153236
(71) Applicant: KYB Corporation, Tokyo 105-6111 (JP)
(72) Inventor: OGAWA, Takayuki, Tokyo 105-6111 (JP)
(74) Representative: MFG Patentanwälte Meyer-Wildhagen Meggle-Freund Gerhard PartG mbB
(86) International application number: PCT/JP2016/066380
(87) International publication number: WO 2017/022318

(57) **Abstract**

To provide a railway vehicle vibration control apparatus that can reduce the amount of power consumed.

A railway vehicle vibration control apparatus (1) of the present invention includes a first semi-active damper (D1) that functions as a semi-active damper under normal control and enters an unloaded stateuponnon-energization, and a second semi-active damper (D2) that functions as a semi-active damper under normal control and as a passive damper in a non-energized state or an actuator (A) that functions as an actuator under normal control and as a passive damper in the non-energized state.

## Description

### Technical Field

The present invention relates to an improvement in a railway vehicle vibration control apparatus.

### Background Art

As disclosed in, for example, JP 2012-184000 A, some railway vehicle vibration control apparatuses of this type conventionally include one where a variable damping force damper and an actuator are interposed between a vehicle body and front and rear trucks of a railway vehicle to reduce vibration in the left and right direction with respect to the travel direction of the vehicle body. This railway vehicle vibration control apparatus is configured in such a manner that a control force required to reduce vibration of the vehicle body is obtained from a yaw velocity and a sway velocity at the center of the vehicle body, and the variable damping force damper and the actuator are caused to exert the obtained control force.

### Summary of the Invention

In this manner, in the known railway vehicle vibration control apparatus, it is required to energize the variable damping force stage damper and the actuator during travel of the railway vehicle. Therefore, power consumption is large.

Hence, the present invention has been devised to improve the above problem, and an object thereof is to provide a railway vehicle vibration control apparatus that can reduce the amount of power consumed.

The railway vehicle vibration control apparatus of the present invention includes: a first semi-active damper configured to function as a semi-active damper under normal control and enter an unloaded state upon non-energization; and a second semi-active damper configured to function as a semi-active damper under normal control and as a passive damper in a non-energized state, or a actuator configured to function as an actuator under normal control and as a passive damper in the non-energized state.

### Brief Description of Drawings

Fig. 1 is a plan view of a railway vehicle where a railway vehicle vibration control apparatus in an embodiment is mounted.
Fig. 2 is a detailed diagram of a first semi-active damper in a railway vehicle vibration control apparatus of an embodiment.
Fig. 3 is a detailed diagram of a second semi-active damper in a railway vehicle vibration control apparatus of an embodiment.
Fig. 4 is a control block diagram of a controller in a railway vehicle vibration control apparatus of an embodiment.
Fig. 5 is a detailed diagram of an actuator in a railway vehicle vibration control apparatus of an embodiment.

### Description of Embodiments

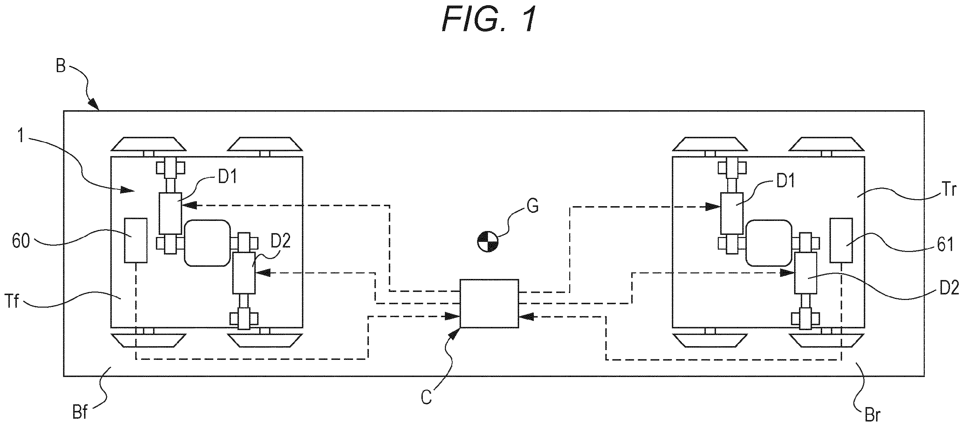

The present invention is described hereinafter on the basis of an embodiment illustrated in the drawings. As illustrated in Fig. 1, a railway vehicle vibration control apparatus 1 in an embodiment includes first semi-active dampers D1 and second semi-active dampers D2, which are interposed between a vehicle body B and front and rear trucks Tf and Tr of a railway vehicle, and a controller C that controls these first semi-active dampers D1 and second semi-active dampers D2. The first semi-active dampers D1 and the second semi-active dampers D2 are paired together. Each of the trucks Tf and Tr provided to front and rear parts of the vehicle body B is provided with one pair of the first semi-active damper D1 and the second semi-active damper D2. The pairs of the first semi-active damper D1 and the second semi-active damper D2 are interposed in parallel between the vehicle body B and the trucks Tf and Tr.

These first semi-active dampers D1 and second semi-active dampers D2 are configured to undergo skyhook semi-active control by the controller C under normal control to reduce vibration in a horizontal lateral direction with respect to a vehicle travel direction of the vehicle body B.

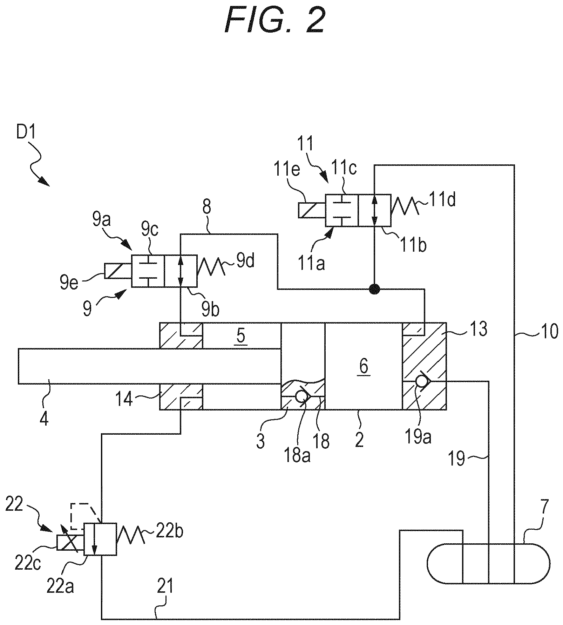

Next, a specific configuration of the first semi-active damper D1 is described. As illustrated in Fig. 2, the first semi-active damper D1 includes a cylinder 2 coupled to one of the truck Tf (Tr) and the vehicle body B of the railway vehicle, a piston 3 that is inserted in the cylinder 2 in a slidable manner, a rod 4 inserted in the cylinder 2 and coupled to the piston 3 and the other of the truck Tf (Tr) and the vehicle body B, a rod-side chamber 5 and a piston-side chamber 6, which are divided by the piston 3 in the cylinder 2, a tank 7, a first on-off valve 9 provided in the middle of a first passage 8 that causes the rod-side chamber 5 and the piston-side chamber 6 to communicate with each other, a second on-off valve 11 provided in the middle of a second passage 10 that causes the piston-side chamber 6 and the tank 7 to communicate with each other, a rectification passage 18 that allows liquid to flow through it only in a direction from the piston-side chamber 6 to the rod-side chamber 5, an inlet passage 19 that allows the liquid to flow through it only in a direction from the tank 7 to the piston-side chamber 6, a discharge passage 21 that connects the rod-side chamber 5 and the tank 7, and a variable relief valve 22 that is provided in the middle of the discharge passage 21 and can change the valve opening pressure. The first semi-active damper D1 is configured as a single rod type of semi-active damper. Moreover, the rod-side chamber 5 and the piston-side chamber 6 are charged with the liquid, and also the tank 7 is charged with gas in addition to the liquid. There is no particular need to make the inside of the tank 7 pressurized by compression and charging of the gas.

In a state where the first passage 8 has been opened by the first on-off valve 9, and also the second passage 10 has been closed by the second on-off valve 11, the first semi-active damper D1 functions as a pulling semi-active damper that exerts the damping force in a contraction operation but does not exert the damping force in an extension operation. On the other hand, when the first passage 8 is closed by the first on-off valve 9, and the second passage 10 is opened by the second on-off valve 11, the first semi-active damper D1 functions as a pulling semi-active damper that exerts the damping force in the extension operation but does not exert the damping force in the contraction operation. Moreover, in a state where the first passage 8 has been closed by the first on-off valve 9, and the second passage 10 has been closed by the second on-off valve 11, the first semi-active damper D1 functions as a passive damper that exerts the damping force in both of the contraction and extension operations. Furthermore, in a state where the first passage 8 has been opened by the first on-off valve 9, and the second passage 10 has been opened by the second on-off valve 11, the first semi-active damper D1 is in an unloaded state where the damping force is exerted in neither the extension operation nor the contraction operation.

Each unit of the first semi-active damper D1 is described in detail below. The cylinder 2 is cylindrical. The cylinder 2 is blocked at the right end in Fig. 2 by a lid 13, and is attached at the left end in Fig. 2 to a ring-shaped rod guide 14. Moreover, the rod 4 inserted in the cylinder 2 in a movable manner is inserted in the rod guide 14 in a slidable manner. One end of the rod 4 protrudes outward from the cylinder 2, and the other end in the cylinder 2 is coupled to the piston 3 that is similarly inserted in the cylinder 2 in a slidable manner.

A sealing member whose illustration is omitted seals a space between an outer periphery of the rod 4 and an inner periphery of the rod guide 14. Consequently, the inside of the cylinder 2 is maintained airtight. The rod-side chamber 5 and the piston-side chamber 6, which are divided by the piston 3 in the cylinder 2, are charged with the liquid as described above. In addition to a hydraulic fluid, a liquid suitable for the first semi-active damper D1 can be used as the liquid charged in the cylinder 2.

Moreover, in a case of the first semi-active damper D1, it is configured in such a manner that the cross-sectional area of the rod 4 is half the cross-sectional area of the piston 3, and a pressure-receiving area on the rod-side chamber 5 side of the piston 3 is half a pressure-receiving area on the piston-side chamber 6 side. Consequently, when the first semi-active damper D1 functions as the passive damper, the amount of liquid discharged from the cylinder 2 with respect to a displacement of the first semi-active damper D1 is the same on both sides of contraction and extension. Therefore, when the first semi-active damper D1 functions as the passive damper, if the piston speed is equal at the time of the extension operation and at the time of the contraction operation, the damping force to be exerted is equal. Even if the pressure-receiving area on the rod-side chamber 5 side of the piston 3 is not set to be half the pressure-receiving area on the piston-side chamber 6 side, the first semi-active damper D1 can function as a damper.

The left end in Fig. 2 of the rod 4 and the lid 13 that blocks the right end of the cylinder 2 include an unillustrated attachment portion to enable the first semi-active damper D1 to be interposed between the vehicle body B and the truck Tf or Tr of the railway vehicle.

The rod-side chamber 5 and the piston-side chamber 6 communicate with each other via the first passage 8. The first on-off valve 9 is provided in the middle of the first passage 8. The first passage 8 causes the rod-side chamber 5 and the piston-side chamber 6 to communicate with each other outside the cylinder 2, but may be provided to the piston 3.

The first on-off valve 9 is a solenoid on-off valve in this example, and is configured including a valve 9a that opens and closes the first passage 8, a spring 9d that biases the valve 9a in such a manner as to open the first passage 8, and a solenoid 9e that switches the valve 9a in such a manner as to close the first passage 8 upon energization. Hence, the first on-off valve 9 is a normally open solenoid on-off valve that opens the first passage 8 upon non-energization. The valve 9a includes a communication position 9b that opens the first passage 8 to cause the rod-side chamber 5 and the piston-side chamber 6 to communicate with each other, and a shut-off position 9c that shuts off the communication between the rod-side chamber 5 and the piston-side chamber 6. It is configured in such a manner that the spring 9d biases the valve 9a to take the communication position 9b, and the solenoid 9e switches the valve 9a to the shut-off position 9c against the spring 9d upon energization.

Next, the second passage 10 causes the piston-side chamber 6 and the tank 7 to communicate with each other. The second on-off valve 11 is provided in the middle of the second passage 10. The second on-off valve 11 is a solenoid on-off valve in this example, and is configured including a valve 11a that opens and closes the second passage 10, a spring 11d that biases the valve 11a in such a manner as to open the second passage 10, and a solenoid 11e that switches the valve 11a in such a manner as to close the second passage 10 upon energization. Hence, the second on-off valve 11 is a normally open solenoid on-off valve that opens the second passage 10 upon energization. The valve 11a includes a communication position 11b that opens the second passage 10 to cause the piston-side chamber 6 and the tank 7 to communicate with each other, and a shut-off position 11c that shuts off the communication between the piston-side chamber 6 and the tank 7. It is configured in such a manner that the spring 11d biases the valve 11a in such a manner as to take the communication position 11b, and the solenoid 11e switches the valve 11a to the shut-off position 11c against the spring 11d upon energization.

Moreover, the first semi-active damper D1 includes the discharge passage 21 that connects the rod-side chamber 5 and the tank 7, and the variable relief valve 22 that is provided in the middle of the discharge passage 21 and can change the valve opening pressure.

The variable relief valve 22 is a proportional solenoid relief valve, and includes a valve element 22a provided in the middle of the discharge passage 21, a spring 22b that biases the valve element 22a in such a manner as to shut-off the discharge passage 21, and a proportional solenoid 22c that produces thrust against the spring 22b upon energization. The variable relief valve 22 is configured in such a manner that the valve opening pressure can be adjusted by adjusting the amount of current flowing through the proportional solenoid 22c.

In terms of the variable relief valve 22, when the pressure of the rod-side chamber 5 upstream of the discharge passage 21 exceeds the relief pressure (valve opening pressure), the pressure of the rod-side chamber 5 and the thrust of the proportional solenoid 22c that presses the valve element 22a overcome the biasing force of the spring 22b, and then the valve element 22a is retracted to open the discharge passage 21.

Moreover, the variable relief valve 22 is configured in such a manner that the thrust produced by the proportional solenoid 22c is increased when the amount of current supplied to the proportional solenoid 22c is increased. Hence, in the variable relief valve 22, the maximum amount of current supplied to the proportional solenoid 22c results in a minimum valve opening pressure. Conversely, no current supplied to the proportional solenoid 22c results in a maximum valve opening pressure.

Furthermore, the first semi-active damper D1 of the embodiment includes the rectification passage 18 and the inlet passage 19, and functions as the passive damper when the first on-off valve 9 and the second on-off valve 11 are closed. The rectification passage 18 allows the liquid to flow through it only in the direction from the piston-side chamber 6 to the rod-side chamber 5. The inlet passage 19 allows the liquid to flow through it only in the direction from the tank 7 to the piston-side chamber 6.

More specifically, the rectification passage 18 causes the piston-side chamber 6 and the rod-side chamber 5 to communicate with each other, and is provided at some midpoint with a check valve 18a. The rectification passage 18 is set as a one-way passage that allows the liquid to flow through it only in the direction from the piston-side chamber 6 to the rod-side chamber 5. Furthermore, the inlet passage 19 causes the tank 7 and the piston-side chamber 6 to communicate with each other, and is provided at some midpoint with a check valve 19a. The inlet passage 19 is set as a one-way passage that allows the liquid to flow through it only in the direction from the tank 7 to the piston-side chamber 6. If the shut-off position 9c of the first on-off valve 9 is a check valve, the rectification passage 18 can be integrated into the first passage 8. If the shut-off position 11c of the second on-off valve 11 is a check valve, the inlet passage 19 can also be integrated into the second passage 10.

In the first semi-active damper D1 configured in this manner, when both of the first on-off valve 9 and the second on-off valve 11 take the shut-off positions 9c and 11c, the rectification passage 18 and the inlet passage 19, and the discharge passage 21 cause the rod-side chamber 5, the piston-side chamber 6, and the tank 7 to communicate with each other in series. The rectification passage 18, the inlet passage 19, and the discharge passage 21 are set as one-way passages. Accordingly, when the first semi-active damper D1 is extended and contracted by an external force, the liquid is always discharged from the cylinder 2. The liquid discharged from the cylinder 2 is returned to the tank 7 via the discharge passage 21. The liquid to fill the cylinder 2 for shortage is supplied from the tank 7 into the cylinder 2 via the inlet passage 19. The variable relief valve 22 resists the flow of the liquid and functions as a pressure control valve that adjusts the pressure inside the cylinder 2 to the valve opening pressure. Accordingly, the first semi-active damper D1 can function as a uniflow type of passive damper.

Moreover, when the first on-off valve 9 is closed and the second on-off valve 11 is open, if the first semi-active damper D1 is extended, the liquid is supplied from the tank 7 to the expanding piston-side chamber 6 and then discharged from the compressed rod-side chamber 5 into the tank 7 via the discharge passage 21. The variable relief valve 22 provides a resistance to the flow of the liquid passing through the discharge passage 21. Accordingly, the pressure of the rod-side chamber 5 is adjusted to the valve opening pressure of the variable relief valve 22. The first semi-active damper D1 exerts the damping force that prevents the extension operation. When the first on-off valve 9 is closed, and the second on-off valve 11 is open, if the first semi-active damper D1 is contracted, the liquid is supplied from the piston-side chamber 6 into the expanding rod-side chamber 5 via the rectification passage 18, and then discharged from the compressed piston-side chamber 6 into the tank 7. In this case, the liquid does not pass through the variable relief valve 22, and the pressure inside the cylinder 2 is the tank pressure. Accordingly, the first semi-active damper D1 does not exert the damping force. Hence, the first semi-active damper D1 functions as a semi-active damper that exerts the damping force only in the extended state when the first on-off valve 9 is closed and the second on-off valve 11 is open.

Furthermore, when the first on-off valve 9 is open and the second on-off valve 11 is closed, if the first semi-active damper D1 is extended, the liquid moves from the compressed rod-side chamber 5 to the piston-side chamber 6, and also the liquid that is equal in volume to the retracted part of the rod is supplied from the tank 7 via the inlet passage 19. In this case, the liquid does not pass through the variable relief valve 22, and the pressure inside the cylinder 2 is the tank pressure. Accordingly, the first semi-active damper D1 does not exert the damping force. When the first on-off valve 9 is open and the second on-off valve 11 is closed, if the first semi-active damper D1 is contracted, the liquid moves from the compressed piston-side chamber 6 to the rod-side chamber 5. The amount of the liquid equal to the volume pushed by the rod 4 entering the cylinder 2 is discharged from the rod-side chamber 5. The liquid discharged from the rod-side chamber 5 moves to the tank 7 via the discharge passage 21, and the variable relief valve 22 provides a resistance to the flow of the liquid passing through the discharge passage 21. Hence, the pressure of the rod-side chamber 5 is adjusted to the valve opening pressure of the variable relief valve 22. The first semi-active damper D1 exerts the damping force to prevent the contraction operation. Hence, the first semi-active damper D1 functions as the semi-active damper that exerts the damping force only in the contracted state when the first on-off valve 9 is open and the second on-off valve 11 is closed.

Furthermore, when both of the first on-off valve 9 and the second on-off valve 11 are open, the rod-side chamber 5 and the piston-side chamber 6 are caused to communicate with the tank 7 via the first on-off valve 9 and the second on-off valve 11. Hence, the inside of the cylinder 2 is always at the tank pressure, and the first semi-active damper D1 enters the unloaded state that does not exert the damping force even if the first semi-active damper D1 is extended and contracted. Both of the first on-off valve 9 and the second on-off valve 11 take the communication positions 9b and 11b upon non-energization. Accordingly, the first semi-active damper D1 enters the unloaded state upon non-energization.

When the first semi-active damper D1 is caused to function as the passive damper, the pressure inside the rod-side chamber 5 is adjusted to the valve opening pressure of the variable relief valve 22. The adjustment of the valve opening pressure of the variable relief valve 22 allows a change in damping force. Moreover, when the first semi-active damper D1 is caused to function as the semi-active damper, if the first semi-active damper D1 is extended and contracted in a direction in which the damping force can be exerted, the pressure inside the rod-side chamber 5 is adjusted to the valve opening pressure of the variable relief valve 22. The adjustment of the valve opening pressure of the variable relief valve 22 allows a change in damping force.

If the variable relief valve 22 is a proportional solenoid relief valve that changes the valve opening pressure in proportion to the amount of current to be provided, the control of the valve opening pressure is facilitated. However, as long as being a relief valve that can adjust the valve opening pressure, the variable relief valve 22 is not limited to a proportional solenoid relief valve. Moreover, when the first semi-active damper D1 has an excessive input in the extension and contraction directions and enters a state where the pressure of the rod-side chamber 5 exceeds the valve opening pressure, the variable relief valve 22 opens the discharge passage 21, causes the rod-side chamber 5 to communicate with the tank 7, and releases the pressure inside the rod-side chamber 5 into the tank 7. Consequently, the inside of the cylinder 2 of the first semi-active damper D1 is protected from excessive pressure.

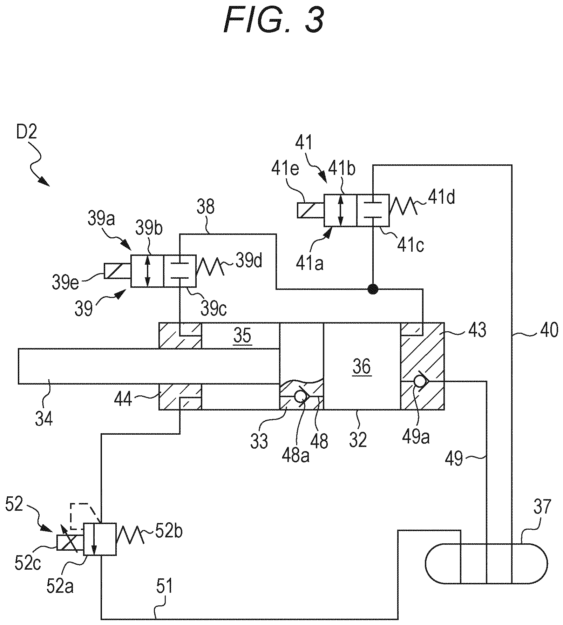

Next, a specific configuration of the second semi-active damper D2 is described. As illustrated in Fig. 3, the second semi-active damper D2 includes a cylinder 32 coupled to one of the truck Tf (Tr) and the vehicle body B of the railway vehicle, a piston 33 inserted in the cylinder 32 in a slidable manner, a rod 34 inserted in the cylinder 32 and coupled to the piston 33 and the other of the truck Tf (Tr) and the vehicle body B, a rod-side chamber 35 and a piston-side chamber 36, which are divided by the piston 33 in the cylinder 32, a tank 37, a first on-off valve 39 provided in the middle of a first passage 38 that causes the rod-side chamber 35 and the piston-side chamber 36 to communicate with each other, a second on-off valve 41 provided in the middle of a second passage 40 that causes the piston-side chamber 36 and the tank 37 to communicate with each other, a rectification passage 48 that allows liquid to flow through it only in a direction from the piston-side chamber 36 to the rod-side chamber 35, an inlet passage 49 that allows the liquid to flow through it only in a direction from the tank 37 to the piston-side chamber 36, a discharge passage 51 that connects the rod-side chamber 35 and the tank 37, and a variable relief valve 52 that is provided in the middle of the discharge passage 51 and can change the valve opening pressure . The second semi-active damper D2 is configured as a single rod type of semi-active damper. Moreover, the rod-side chamber 35 and the piston-side chamber 36 are charged with the liquid, and also the tank 37 is charged with gas in addition to the liquid. There is no particular need to make the inside of the tank 37 pressurized by compression and charging of the gas.

In a state where the first passage 38 has been opened by the first on-off valve 39, and also the second passage 40 has been closed by the second on-off valve 41, the second semi-active damper D2 functions as a pulling semi-active damper that exerts the damping force in a contraction operation but does not exert the damping force in an extension operation. On the other hand, when the first passage 38 is closed by the first on-off valve 39, and the second passage 40 is opened by the second on-off valve 41, the second semi-active damper D2 functions as a pulling semi-active damper that exerts the damping force in the extension operation but does not exert the damping force in the contraction operation. Moreover, in a state where the first passage 38 has been closed by the first on-off valve 39, and the second passage 40 has been closed by the second on-off valve 41, the second semi-active damper D2 functions as a passive damper that exerts the damping force in both of the contraction and extension operations. Furthermore, in a state where the first passage 38 has been opened by the first on-off valve 39, and the second passage 40 has been opened by the second on-off valve 41, the second semi-active damper D2 is in the unloaded state where the damping force is exerted in neither the extension operation nor the contraction operation.

Each unit of the second semi-active damper D2 is described in detail below. The cylinder 32 is cylindrical. The cylinder 32 is blocked at the right end in Fig. 3 by a lid 43, and is attached at the left end in Fig. 3 to a ring-shaped rod guide 44. Moreover, the rod 34 inserted in the cylinder 32 in a movable manner is inserted in the rod guide 44 in a slidable manner. One end of the rod 34 protrudes outward from the cylinder 32, and the other end in the cylinder 32 is coupled to the piston 33 that is similarly inserted in the cylinder 32 in a slidable manner.

A sealing member whose illustration is omitted seals a space between an outer periphery of the rod 34 and an inner periphery of the rod guide 44. Consequently, the inside of the cylinder 32 is maintained airtight. The rod-side chamber 35 and the piston-side chamber 36, which are divided by the piston 33 in the cylinder 32, are charged with the liquid as described above. In addition to a hydraulic fluid, a liquid suitable for the second semi-active damper D2 can be used as the liquid charged in the cylinder 32.

Moreover, in a case of the second semi-active damper D2, it is configured in such a manner that the cross-sectional area of the rod 34 is half the cross-sectional area of the piston 33, and a pressure-receiving area on the rod-side chamber 35 side of the piston 33 is half a pressure-receiving area on the piston-side chamber 36 side. Consequently, when the second semi-active damper D2 functions as the passive damper, the amount of liquid discharged from the cylinder 32 with respect to a displacement of the second semi-active damper D2 is the same on both sides of contraction and extension. Therefore, when the second semi-active damper D2 functions as the passive damper, if the piston speed is equal at the time of the extension operation and at the time of the contraction operation, the damping force to be exerted is equal. Even if the pressure-receiving area on the rod-side chamber 35 side of the piston 33 is not set to be half the pressure-receiving area on the piston-side chamber 36 side, the second semi-active damper D2 can function as a damper.

The left end in Fig. 3 of the rod 34 and the lid 43 that blocks the right end of the cylinder 32 include an unillustrated attachment portion to enable the second semi-active damper D2 to be interposed between the vehicle body B and the truck Tf or Tr of the railway vehicle.

The rod-side chamber 35 and the piston-side chamber 36 communicate with each other via the first passage 38. The first on-off valve 39 is provided in the middle of the first passage 38. The first passage 38 causes the rod-side chamber 35 and the piston-side chamber 36 to communicate with each other outside the cylinder 32, but may be provided to the piston 33.

The first on-off valve 39 is a solenoid on-off valve in this example, and is configured including a valve 39a that opens and closes the first passage 38, a spring 39d that biases the valve 39a in such a manner as to close the first passage 38, and a solenoid 39e that switches the valve 39a in such a manner as to open the first passage 38 upon energization. Hence, the first on-off valve 39 is a normally closed solenoid on-off valve that closes the first passage 38 upon non-energization. The valve 39a includes a communication position 39b that opens the first passage 38 to cause the rod-side chamber 35 and the piston-side chamber 36 to communicate with each other, and a shut-off position 39c that shuts off the communication between the rod-side chamber 35 and the piston-side chamber 36. It is configured in such a manner that the spring 39d biases the valve 39a to take the shut-off position 39c, and the solenoid 39e switches the valve 39a to the communication position 39b against the spring 39d upon energization.

Next, the second passage 40 causes the piston-side chamber 36 and the tank 37 to communicate with each other. The second on-off valve 41 is provided in the middle of the second passage 40. The second on-off valve 41 is a solenoid on-off valve in this example, and is configured including a valve 41a that opens and closes the second passage 40, a spring 41d that biases the valve 41a in such a manner as to close the second passage 40, and a solenoid 41e that switches the valve 41a in such a manner as to open the second passage 40 upon energization. Hence, the second on-off valve 41 is a normally closed solenoid on-off valve that closes the second passage 40 upon non-energization. The valve 41a includes a communication position 41b that opens the second passage 40 to cause the piston-side chamber 36 and the tank 37 to communicate with each other, and a shut-off position 41c that shuts off the communication between the piston-side chamber 36 and the tank 37. It is configured in such a manner that the spring 41d biases the valve 41a in such a manner as to take the shut-off position 41c, and the solenoid 41e switches the valve 41a to the communication position 41b against the spring 41d upon energization.

Moreover, the second semi-active damper D2 includes the discharge passage 51 that connects the rod-side chamber 35 and the tank 37, and the variable relief valve 52 that is provided in the middle of the discharge passage 51 and can change the valve opening pressure.

The variable relief valve 52 is a proportional solenoid relief valve, and includes a valve element 52a provided in the middle of the discharge passage 51, a spring 52b that biases the valve element 52a in such a manner as to shut off the discharge passage 51, and a proportional solenoid 52c that produces thrust against the spring 52b upon energization. It is configured in such a manner that the variable relief valve 52 can adjust the valve opening pressure by adjusting the amount of current flowing through the proportional solenoid 52c.

In terms of the variable relief valve 52, when the pressure of the rod-side chamber 35 upstream of the discharge passage 51 exceeds the relief pressure (valve opening pressure), the pressure of the rod-side chamber 35 and the thrust of the proportional solenoid 52c that presses the valve element 52a overcome the biasing force of the spring 52b, and then the valve element 52a is retracted to open the discharge passage 51.

Moreover, the variable relief valve 52 is configured in such a manner that the thrust produced by the proportional solenoid 52c is increased when the amount of current supplied to the proportional solenoid 52c is increased. Hence, in the variable relief valve 52, the maximum amount of current supplied to the proportional solenoid 52c results in a minimum valve opening pressure. Conversely, no current supplied to the proportional solenoid 52c results in a maximum valve opening pressure.

Furthermore, the second semi-active damper D2 of the embodiment includes the rectification passage 48 and the inlet passage 49, and functions as the passive damper when the first on-off valve 39 and the second on-off valve 41 are closed. The rectification passage 48 allows the liquid to flow through it only in the direction from the piston-side chamber 36 to the rod-side chamber 35. The inlet passage 49 allows the liquid to flow through it only in the direction from the tank 37 to the piston-side chamber 36.

More specifically, the rectification passage 48 causes the piston-side chamber 36 and the rod-side chamber 35 to communicate with each other, and is provided at some midpoint with a check valve 48a. The rectification passage 48 is set as a one-way passage that allows the liquid to flow through it only in the direction from the piston-side chamber 36 to the rod-side chamber 35. Furthermore, the inlet passage 49 causes the tank 37 and the piston-side chamber 36 to communicate with each other, and is provided at some midpoint with a check valve 49a. The inlet passage 49 is set as a one-way passage that allows the liquid to flow through it only in the direction from the tank 37 to the piston-side chamber 36. If the shut-off position 39c of the first on-off valve 39 is a check valve, the rectification passage 48 can be integrated into the first passage 38. If the shut-off position 41c of the second on-off valve 41 is a check valve, the inlet passage 49 can also be integrated into the second passage 40.

In the second semi-active damper D2 configured in this manner, when both of the first on-off valve 39 and the second on-off valve 41 take the shut-off positions 39c and 41c, the rectification passage 48 and the inlet passage 49, and the discharge passage 51 cause the rod-side chamber 35, the piston-side chamber 36, and the tank 37 to communicate with each other in series. The rectification passage 48, the inlet passage 49, and the discharge passage 51 are set as one-way passages. Accordingly, when the second semi-active damper D2 is extended and contracted by an external force, the liquid is always discharged from the cylinder 32. The liquid discharged from the cylinder 32 is returned to the tank 37 via the discharge passage 51. The liquid to fill the cylinder 32 for shortage is supplied from the tank 37 into the cylinder 32 via the inlet passage 49. The variable relief valve 52 resists the flow of the liquid and functions as a pressure control valve that adjusts the pressure inside the cylinder 32 to the valve opening pressure . Accordingly, the second semi-active damper D2 can function as the uniflow type of passive damper.

Moreover, when the first on-off valve 39 is closed and the second on-off valve 41 is open, if the second semi-active damper D2 is extended, the liquid is supplied from the tank 37 to the expanding piston-side chamber 36 and then discharged from the compressed rod-side chamber 35 into the tank 37 via the discharge passage 51. The variable relief valve 52 provides a resistance to the flow of the liquid passing through the discharge passage 51. Accordingly, the pressure of the rod-side chamber 35 is adjusted to the valve opening pressure of the variable relief valve 52. The second semi-active damper D2 exerts the damping force that prevents the extension operation. When the first on-off valve 39 is closed, and the second on-off valve 41 is open, if the second semi-active damper D2 is contracted, the liquid is supplied from the piston-side chamber 36 into the expanding rod-side chamber 35 via the rectification passage 48, and then discharged from the compressed piston-side chamber 36 into the tank 37. In this case, the liquid does not pass through the variable relief valve 52, and the pressure inside the cylinder 32 is the tank pressure. Accordingly, the second semi-active damper D2 does not exert the damping force. Hence, the second semi-active damper D2 functions as the semi-active damper that exerts the damping force only in the extended state when the first on-off valve 39 is closed and the second on-off valve 41 is open.

Furthermore, when the first on-off valve 39 is open and the second on-off valve 41 is closed, if the second semi-active damper D2 is extended, the liquid moves from the compressed rod-side chamber 35 to the piston-side chamber 36, and also the liquid that is equal in volume to the retracted part of the rod is supplied from the tank 37 via the inlet passage 49. In this case, the liquid does not pass through the variable relief valve 52, and the pressure inside the cylinder 32 is the tank pressure. Accordingly, the second semi-active damper D2 does not exert the damping force. When the first on-off valve 39 is open and the second on-off valve 41 is closed, if the second semi-active damper D2 is contracted, the liquid moves from the compressed piston-side chamber 36 to the rod-side chamber 35. The amount of the liquid equal to the volume pushed by the rod 34 entering the cylinder 32 is discharged from the rod-side chamber 35. The liquid discharged from the rod-side chamber 35 moves to the tank 37 via the discharge passage 51, and the variable relief valve 52 provides a resistance to the flow of the liquid passing through the discharge passage 51. Hence, the pressure of the rod-side chamber 35 is adjusted to the valve opening pressure of the variable relief valve 52. The second semi-active damper D2 exerts the damping force to prevent the contraction operation. Hence, the second semi-active damper D2 functions as the semi-active damper that exerts the damping force only in the contracted state when the first on-off valve 39 is open and the second on-off valve 41 is closed.

Furthermore, when both of the first on-off valve 39 and the second on-off valve 41 are open, the rod-side chamber 35 and the piston-side chamber 36 are caused to communicate with the tank 37 via the first on-off valve 39 and the second on-off valve 41. Hence, the inside of the cylinder 32 is always at the tank pressure, and the second semi-active damper D2 enters the unloaded state that does not exert the damping force even when the second semi-active damper D2 is extended and contracted. Both of the first on-off valve 39 and the second on-off valve 41 take the shut-off positions 39c and 41c upon non-energization. Accordingly, the second semi-active damper D2 functions as the passive damper.

When the second semi-active damper D2 is caused to function as the passive damper, the pressure inside the rod-side chamber 35 is adjusted to the valve opening pressure of the variable relief valve 52. When the proportional solenoid 52c of the variable relief valve 52 is energized to adjust the valve opening pressure, the damping force can be changed. When the second semi-active damper D2 is caused to function as the passive damper, if the variable relief valve 52 is not energized, either, the second semi-active damper D2 functions as the passive damper that produces the maximum damping force. Moreover, when the second semi-active damper D2 is caused to function as the semi-active damper, if the second semi-active damper D2 is extended and contracted in the direction in which the damping force can be exerted, the pressure inside the rod-side chamber 35 is adjusted to the valve opening pressure of the variable relief valve 52. The adjustment of the valve opening pressure of the variable relief valve 52 allows a change in damping force.

If the variable relief valve 52 is a proportional solenoid relief valve that changes the valve opening pressure in proportion to the amount of current to be provided, the control of the valve opening pressure is facilitated. However, as long as being a relief valve that can adjust the valve opening pressure, the variable relief valve 52 is not limited to a proportional solenoid relief valve. Moreover, when the second semi-active damper D2 has an excessive input in the extension and contraction directions and enters state where the pressure of the rod-side chamber 35 exceeds the valve opening pressure, the variable relief valve 52 opens the discharge passage 51, causes the rod-side chamber 35 to communicate with the tank 37, and releases the pressure inside the rod-side chamber 35 into the tank 37. Consequently, the inside of the cylinder 32 of the second semi-active damper D2 is protected from excessive pressure.

In this example, when performing control to reduce the vibration of the vehicle body B, the controller C detects a lateral acceleration αf of a front vehicle body Bf of the vehicle body B in the horizontal lateral direction with respect to the vehicle travel direction, and a lateral acceleration αr of a rear vehicle body Br of the vehicle body B in the horizontal lateral direction with respect to the vehicle travel direction. The controller C then obtains a yaw acceleration ω being an angular acceleration about a center G of the vehicle body B and a sway acceleration S being an acceleration in the horizontal lateral direction of the center G of the vehicle body B directly above the front and rear trucks Tf and Tr on the basis of the lateral acceleration αf and the lateral acceleration αr. Furthermore, the controller C obtains a target yaw restraining force Fωref required to reduce the yaw vibration of the entire vehicle body B on the basis of the yaw acceleration ω, and obtains a target sway restraining force FSref required to reduce the sway vibration of the entire vehicle body B on the basis of the sway acceleration S. Moreover, the controller C is configured to be capable of recognizing whether a section in which the railway vehicle is travelling is an open section, a curved section, or a tunnel section. In this example, the controller C sets a section being a combination of the open section and the curved section as the curved section, and sets a section being a combination of the tunnel section and the curved section as the tunnel section.

When the railway vehicle travels in the open section, the controller C brings the first semi-active dampers D1 provided to the trucks Tf and Tr to the unloaded state to bring the first semi-active dampers D1 to a state where thrust is not exerted. Moreover, the controller C performs normal control on the second semi-active dampers D2 provided to the trucks Tf and Tr in accordance with the skyhook control law, and causes the second semi-active dampers D2 to function as the semi-active dampers.

Moreover, when the railway vehicle travels in the curved section, the controller C causes the first semi-active dampers D1 provided to the trucks Tf and Tr to function as the passive dampers. Furthermore, the controller C performs normal control on the second semi-active dampers D2 provided to the trucks Tf and Tr in accordance with the skyhook control law, and causes the second semi-active dampers D2 to function as the semi-active dampers.

Furthermore, when the railway vehicle travels in the tunnel section, the controller C performs normal control on the first semi-active dampers D1 and the second semi-active dampers D2, which are provided to the trucks Tf and Tr, in accordance with the skyhook control law, and causes the first semi-active dampers D1 and the second semi-active dampers D2 to function as the semi-active dampers.

Moreover, when the speed of the railway vehicle is equal to or less than a set speed, the controller C brings the first semi-active dampers D1 to the unloaded state, and causes the second semi-active dampers D2 to function as the passive dampers, irrespective of whatever section the railway vehicle is travelling. The set speed is set at a speed that allows a sufficient vibration control effect to be obtained even if the speed of the railway vehicle is low and the second semi-active dampers D2 function as the passive dampers, and is, for example, a speed approximately half the maximum speed of the railway vehicle although it depends on the line.

When bringing the first semi-active damper D1 to the unloaded state, the controller C stops the energization of the first on-off valve 9 and the second on-off valve 11 of the first semi-active damper D1 to open the valves. Moreover, when bringing the second semi-active damper D2 to the unloaded state, the controller C energizes the first on-off valve 39 and the second on-off valve 41 of the second semi-active damper D2 to open the valves.

When causing the first semi-active damper D1 to function as the passive damper, the controller C energizes and closes the first on-off valve 9 and the second on-off valve 11, and adjusts the amount of current through the variable relief valve 22 to obtain a desired damping force. The variable relief valve 22 then has a resistance and the first semi-active damper D1 then exerts the damping force as the uniflow type of passive damper. When causing the second semi-active damper D2 to function as the passive damper, the controller C stops the energization of the first on-off valve 39 and the second on-off valve 41 to close the valves, and also adjusts the amount of current through the variable relief valve 52 to obtain a desired damping force. The variable relief valve 52 then has a resistance and the second semi-active damper D2 exerts the damping force as the uniflow type of passive damper.

When the railway vehicle travels in the open section, the controller C brings the first semi-active dampers D1 to the unloaded state, and performs normal control to exert the damping force only on the second semi-active dampers D2 as follows: When the first semi-active dampers D1 are brought to the unloaded state, the controller C operates as described above. Moreover, the controller C causes the second semi-active damper D2 provided to the front truck Tf to output a front control force Ftf obtained by adding a value obtained by multiplying the target yaw restraining force Fωref by 1/2 and a value obtained by multiplying the target sway restraining force FSref by 1/2. The controller C causes the second semi-active damper D2 provided to the rear truck Tr to output a rear control force Ftr obtained by subtracting a value obtained by multiplying the target sway restraining force FSref by 1/2 from a value obtained by multiplying the target yaw restraining force Fωref by 1/2. If each of the control forces Ftf and Ftr is a force that exerts the damping force on the extension side of the second semi-active damper D2, the controller C closes the first on-off valve 39 and opens the second on-off valve 41. Conversely, if each of the control forces Ftf and Ftr is a force that exerts the damping force on the contraction side of the second semi-active damper D2, the controller C opens the first on-off valve 39 and closes the second on-off valve 41. After that, the controller C performs control in such a manner as to adjust the valve opening pressure of the variable relief valve 52 and set the damping force produced by the second semi-active damper D2 to each of the control forces Ftf and Ftr.

When the railway vehicle travels in the curved section, the controller C performs normal control to cause only the second semi-active dampers D2 to exert the damping force as follows: The controller C causes the semi-active dampers D1 and D2 provided to the front truck Tf to output the front control force Ftf obtained by adding a value obtained by multiplying the target yaw restraining force Fωref by 1/2 and a value obtained by multiplying the target sway restraining force FSref by 1/2. Furthermore, the controller C causes the semi-active dampers D1 and D2 provided to the rear truck Tr to output the rear control force Ftr obtained by subtracting a value obtained by multiplying the target sway restraining force FSref by 1/2 from a value obtained by multiplying the target yaw restraining force Fωref by 1/2. The controller C energizes and closes the first on-off valve 9 and the second on-off valve 11 and controls the valve opening pressure of the variable relief valve 22 in such a manner that the damping force that is output when the first semi-active damper D1 is caused to function as the passive damper is suitable for the curved section. Moreover, in terms of the second semi-active damper D2, if each of the control forces Ftf and Ftr is a force that exerts the damping force on the extension side of the second semi-active damper D2, the controller C closes the first on-off valve 39 and opens the second on-off valve 41. Conversely, if each of the control forces Ftf and Ftr is a force that exerts the damping force on the contraction side of the second semi-active damper D2, the controller C opens the first on-off valve 39 and closes the second on-off valve 41. After that, the controller C perform control in such a manner as to adjust the valve opening pressure of the variable relief valve 52 and set the damping force produced by the second semi-active damper D2 to each of the control forces Ftf and Ftr.

When the railway vehicle travels in the tunnel section, the controller C performs normal control on both of the first semi-active dampers D1 and the second semi-active dampers D2 as follows: The controller C causes the first semi-active damper D1 and the second semi-active damper D2, which are provided to the front truck Tf, to output the front control force Ftf obtained by adding a value obtained by multiplying the target yaw restraining force Fωref by 1/4 and a value obtained by multiplying the target sway restraining force FSref by 1/4. The controller C causes the first semi-active damper D1 and the second semi-active damper D2, which are provided to the rear truck Tr, to output the rear control force Ftr obtained by subtracting a value obtained by multiplying the target sway restraining force FSref by 1/4 from a value obtained by multiplying the target yaw restraining force Fωref by 1/4. If each of the control forces Ftf and Ftr is a force that exerts the damping force on the extension side of the first semi-active damper D1 and the second semi-active damper D2, the controller C closes the first on-off valves 9 and 39 and opens the second on-off valves 11 and 41. Conversely, if each of the control forces Ftf and Ftr is a force that exerts the damping force on the contraction side of the first semi-active damper D1 and the second semi-active damper D2, the controller C opens the first on-off valves 9 and 39 and closes the second on-off valves 11 and 41. After that, the controller C performs control in such a manner as to adjust the valve opening pressures of the variable relief valves 22 and 52 and set the damping forces produced by the first semi-active damper D1 and the second semi-active damper D2 to the control forces Ftf and Ftr.

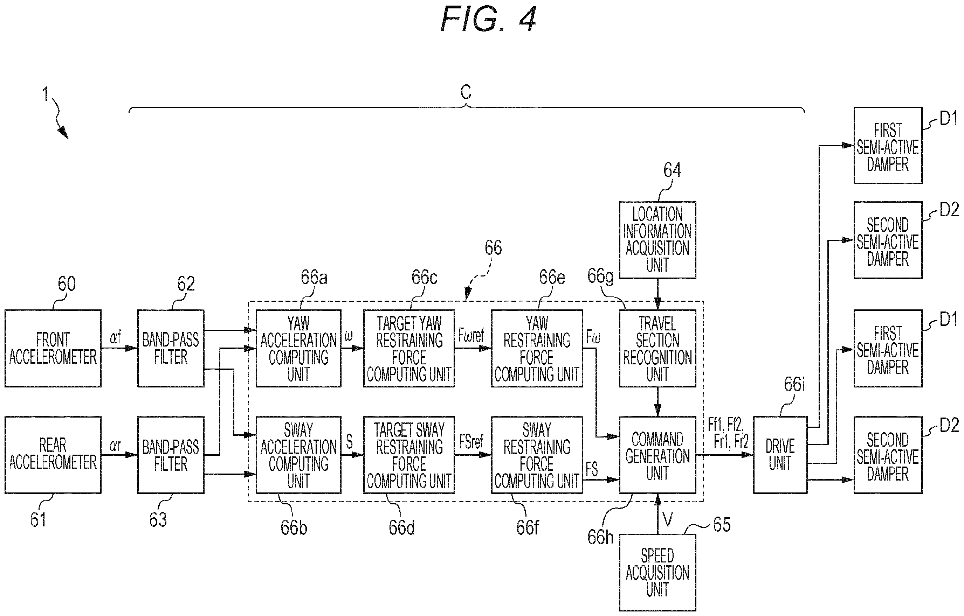

Next, as illustrated in Fig. 4, the controller C is configured including a front accelerometer 60 that detects the front lateral acceleration αf of the front vehicle body Bf as the front part of the vehicle body in the horizontal lateral direction with respect to the vehicle travel direction, a rear accelerometer 61 that detects the rear lateral acceleration αr of the rear vehicle body Br as the rear part of the vehicle body in the horizontal lateral direction with respect to the vehicle travel direction, band-pass filters 62 and 63 that remove noise included in the lateral acceleration αf and the lateral acceleration αr, a location information acquisition unit 64 that acquires information on a location where the railway vehicle is travelling, and a control unit 66 that processes the lateral acceleration αf and the lateral acceleration αr filtered by the band-pass filters 62 and 63, and outputs control commands to the solenoids 9e and 39e of the first on-off valves 9 and 39, the solenoids 11e and 41e of the second on-off valves 11 and 41, and the proportional solenoids 22c and 52c of the variable relief valves 22 and 52 of the first semi-active damper D1 and the second semi-active damper D2, on the basis of that the travel section from the location information of the railway vehicle obtained by the location information acquisition unit 64 indicates the open section, the curved section, or the tunnel section, and the speed V of the railway vehicle input from a speed acquisition unit 65.

In the embodiment, the control unit 66 is configured to obtain the target yaw restraining force Fωref and the target sway restraining force FSref by performing H∞ control and assigning a weight to a frequency. Accordingly, it is also possible to omit the band-pass filters 62 and 63.

In this case, the location information acquisition unit 64 and the speed acquisition unit 65 are a central vehicle monitor mounted on a certain vehicle in a train composition, or a vehicle monitor terminal connected to the central vehicle monitor. The location information acquisition unit 64 and the speed acquisition unit 65 are configured to be capable of obtaining the travel location and the speed V of the railway vehicle in real time. The location information acquisition unit 64 may not be the vehicle monitor, and may be one that can detect the travel location of the railway vehicle, such as GPS (Global Positioning System) . The speed acquisition unit 65 may not be the vehicle monitor and may be a speed sensor that detects the speed V of the railway vehicle.

The control unit 66 is configured including a yaw acceleration computing unit 66a that obtains the yaw acceleration ω about the center G of the vehicle body B directly above the front truck Tf and the rear truck Tr on the basis of the front lateral acceleration αf detected by the front accelerometer 60 and the rear lateral acceleration αr detected by the rear accelerometer 61, a sway acceleration computing unit 66b that obtains the sway acceleration S at the center G of the vehicle body B on the basis of the lateral acceleration αf and the lateral acceleration αr, a target yaw restraining force computing unit 66c that obtains the target yaw restraining force Fωref required to reduce the yaw of the entire vehicle body B on the basis of the yaw acceleration ω, a target sway restraining force computing unit 66d that obtains the target sway restraining force FSref required to reduce the sway of the entire vehicle body B on the basis of the sway acceleration S, a yaw restraining force computing unit 66e that computes the yaw restraining force Fω from the target yaw restraining force Fωref obtained by the target yaw restraining force computing unit 66c, a sway restraining force computing unit 66f that computes the sway restraining force FS from the target sway restraining force FSref obtained by the target sway restraining force computing unit 66d, a travel section recognition unit 66g that judges whether or not the travel section is the curved section from the location information obtained from the location information acquisition unit 64, a command generation unit 66h that determines whether the first semi-active damper D1 and the second semi-active damper D2 are brought to the unloaded state, or caused to function as the passive damper or the semi-active damper, on the basis of the recognition result of the travel section recognition unit 66g and the speed V of the railway vehicle, and obtains control commands Ff1, Ff2, Fr1, and Fr2 provided respectively to the first semi-active dampers D1 and the second semi-active dampers D2, from the above determination and the yaw restraining force Fω and the sway restraining force FS, and a drive unit 66i that drives the solenoids 9e and 39e of the first on-off valves 9 and 39, the solenoids 11e and 41e of the second on-off valves 11 and 41, and the proportional solenoids 22c and 52c of the variable relief valves 22 and 52 on the basis of the control commands Ff1, Ff2, Fr1, and Fr2.

Specifically, although not illustrated, the controller C is simply required to be configured including, as hardware resources, for example, an A/D converter for capturing signals output by the front accelerometer 60 and the rear accelerometer 61, the band-pass filters 62 and 63, a storage device, such as ROM (Read Only Memory), where a program used for a process required to capture the lateral acceleration αf and the lateral acceleration αr, which are fileted by the band-pass filters 62 and 63, and control the first semi-active dampers D1 and the second semi-active dampers D2 is stored, an arithmetic unit, such as a CPU (Central Processing Unit), that executes the process based on the program, and a storage device, such as RAM (Random Access Memory), that provides the CPU with a storage area. Each part of the control unit 66 of the controller C can be realized by the CPU executing the program to perform the process . Moreover, the band-pass filters 62 and 63 may also be realized by the CPU executing the program.

Next, in this example, the lateral accelerations αf and αr are set in such a manner as to be positive in an upward direction with respect to an axis passing the center of the vehicle body B of Fig. 1 from left to right, and conversely, to be negative in a downward direction with respect to the axis passing the center of the vehicle body B of Fig. 1 from left to right. The yaw acceleration computing unit 66a obtains the yaw acceleration ω about the center G of the vehicle body B directly above each of the front truck Tf and the rear truck Tr by dividing a difference between the front lateral acceleration αf and the rear lateral acceleration αr by two. The sway acceleration computing unit 66b obtains the sway acceleration S of the center G of the vehicle body B by dividing the sum of the lateral acceleration αf and the lateral acceleration αr by two. In terms of the positions to mount the front accelerometer 60 and the rear accelerometer 61, the front accelerometer 60 is placed on a line along the front and rear direction, or diagonal direction, including the center G of the vehicle body B and near the front semi-active dampers D1 and D2 to obtain the yaw acceleration ω. Moreover, the rear accelerometer 61 is placed on a line including the center G of the vehicle body B and the mount position of the front accelerometer 60 and near the rear semi-active dampers D1 and D2. The yaw acceleration ω can be obtained from the distances and positional relationships between the center G of the vehicle body B and the front accelerometer 60 and the rear accelerometer 61, and the lateral accelerations αf and αr. Accordingly, the mount positions of the front accelerometer 60 and the rear accelerometer 61 can be freely set. In this case, the yaw acceleration ω is not obtained by dividing the difference between the lateral acceleration αf and the lateral acceleration αr by two, but may be obtained from the difference between the lateral acceleration αf and the lateral acceleration αr and the distances and positional relationships between the center G of the vehicle body B and the accelerometers 60 and 61.

Next, in this example, in order to perform H∞ control, the target yaw restraining force computing unit 66c obtains the target yaw restraining force Fωref being a restraining force required to reduce the yaw of the entire vehicle body B from the yaw acceleration ω computed by the yaw acceleration computing unit 66a. Specifically, when having received the input of the yaw acceleration ω, the target yaw restraining force computing unit 66c shapes a frequency with a weighted function, and obtains the optimum target yaw restraining force Fωref for reducing the yaw vibration in a frequency band especially desired to be reduced within the yaw vibration of the entire vehicle body B. The weighted function is designed in such a manner as to be suitable for the railway vehicle.

Moreover, in this example, in order to perform Hoo control, the target sway restraining force computing unit 66d obtains the target sway restraining force FSref being a restraining force required to reduce the sway of the entire vehicle body B from the sway acceleration S computed by the sway acceleration computing unit 66b. Specifically, when having received the input of the sway acceleration S, the target sway restraining force computing unit 66d shapes a frequency with a weighted function, and obtains the optimum target yaw restraining force Fωref for reducing the sway vibration in a frequency band especially desired to be reduced within the sway vibration of the entire vehicle body B. The weighted function is designed in such a manner as to be suitable for the railway vehicle.

The yaw restraining force computing unit 66e obtains the yaw restraining force Fω as the resultant output by all the front semi-active dampers D1 and D2 and the resultant output by all the rear semi-active dampers D1 and D2 from the target yaw restraining force Fωref obtained by the target yaw restraining force computing unit 66c to reduce the yaw. The target yaw restraining force Fωref is a restraining force to reduce the vibration of the entire vehicle body B in the yaw direction. The yaw restraining force Fω is obtained by multiplying the target yaw restraining force Fωref by 1/2 to reduce the yaw of the vehicle body B with the resultant output by all the front semi-active dampers D1 and D2 and all the rear semi-active dampers D1 and D2.

The sway restraining force computing unit 66f obtains the sway restraining force FS as the resultant output by all the front semi-active dampers D1 and D2 and the resultant output by all the rear semi-active dampers D1 and D2 from the target sway restraining force FSref obtained by the target sway restraining force computing unit 66d to reduce the sway. The target sway restraining force FSref is a restraining force to reduce the vibration of the entire vehicle body B in the sway direction. The sway restraining force FS is obtained by multiplying the target sway restraining force FSref by 1/2 to reduce the sway of the vehicle body B with the resultant output by all the front semi-active dampers D1 and D2 and all the rear semi-active dampers D1 and D2.

The travel section recognition unit 66g judges whether a section where the railway vehicle is travelling is the curved section or other sections from the location information obtained from the location information acquisition unit 64, and outputs the judgment result to the command generation unit 66h. Specifically, for example, the travel section recognition unit 66g includes a map where travel section information is associated with a travel location, and refers to the map on the basis of the travel location of the railway vehicle, and judges whether it is the open section, the curved section, or the tunnel section. Moreover, although not limited to the following, for example, transmitters that transmit signals at boundaries of the open section, the curved section, and the tunnel section may be provided, and also a receiver that receives the signals of the transmitters may be provided as the location information acquisition unit on the railway vehicle side. In this case, the travel section recognition unit can recognize the type of section with the receipt of a signal of the transmitter. In short, the travel section recognition unit 66g is simply required to be capable of recognizing which of the open section, the curved section, and the tunnel section the current travel section is. When the railway vehicle enters the curved section from the open section, the tunnel section from the open section, and the tunnel section from the curved section while travelling on a line, the controller C is required to be capable of switching control before the entry to maintain excellent ride comfort in the curved section and the tunnel section. Moreover, location information may be associated with information that can determine what kind of curve the curved section is to allow the setting of the optimum damping force and damping coefficient for the curved section when the first semi-active damper D1 is caused to function as the passive damper in the curved section. Specifically, information that can determine what kind of curve the curved section is, such as the amount of cant, curvature, the determination of a transition curve or steady curve section, the pattern of the transition curve in a case of the transition curve, and slack of the curved section, is associated beforehand, and used to aid in the setting of the damping force and the damping coefficient.

The command generation unit 66h determines whether each of the semi-active dampers D1 and D2 is brought to the unloaded state, or is caused to function as the passive or semi-active damper, on the basis of the recognition result of the travel section recognition unit 66g and the speed V of the railway vehicle . After that, the command generation unit 66h obtains the control commands Ff1, Ff2, Fr1, and Fr2 on the basis of the yaw restraining force Fω and the sway restraining force FS.

When the recognition result of the travel section recognition unit 66g indicates that the travel location of the railway vehicle is in the open section, and the speed V exceeds the set speed, the command generation unit 66h determines to bring the first semi-active damper D1 to the unloaded state, and perform normal control to exert the damping force only on the second semi-active damper D2. The command generation unit 66h then generates the control commands Ff1 and Fr1 to bring the first semi-active dampers D1 provided to the trucks Tf and Tr to the unloaded state. Moreover, the command generation unit 66h generates the control commands Ff2 and Fr2 to perform normal control on the second semi-active dampers D2 provided to the truck Tf and Tr. Specifically, the command generation unit 66h obtains the front control force Ftf obtained by adding the sway restraining force FS and the yaw restraining force Fω, and generates the control command Ff2 to perform normal control on the second semi-active damper D2 provided to the truck Tf. Furthermore, the command generation unit 66h obtains the rear control force Ftr obtained by subtracting the yaw restraining force Fω from the sway restraining force FS, and generates the control command Fr2 to perform normal control on the second semi-active damper D2 provided to the rear truck Tr. A couple that reduces the yaw vibration of the vehicle body B needs to be exerted by the front and rear semi-active dampers D1 and D2. Accordingly, the yaw restraining force Fω is added to the sway restraining force FS to obtain the front control force Ftf at the front truck Tf. The yaw restraining force Fω is subtracted from the sway restraining force FS to obtain the rear control force Ftr at the rear truck Tr.

When the recognition result of the travel section recognition unit 66g indicates that the travel location of the railway vehicle is in the curved section and the speed V exceeds the set speed, the command generation unit 66h determines to cause the first semi-active damper D1 to function as the passive damper, and to perform normal control on the second semi-active damper D2. The command generation unit 66h generates the control commands Ff1 and Fr1 that cause the first semi-active dampers D1 provided to the trucks Tf and Tr to function as the passive dampers. In terms of the amount of current provided to the variable relief valve 22, the control commands Ff1 and Fr1 are generated in such a manner as to make the damping forces of the first semi-active dampers D1 suitable for travel in the curved section. Moreover, the command generation unit 66h performs normal control on the second semi-active dampers D2 provided to the trucks Tf and Tr. Accordingly, as described in the open section, the front control force Ftf and the rear control force Ftr are obtained to generate the control commands Ff2 and Fr2.

When the recognition result of the travel section recognition unit 66g indicates that the travel location of the railway vehicle is in the tunnel section, and the speed V exceeds the set speed, the command generation unit 66h determines to perform normal control on the first semi-active dampers D1 and the second semi-active dampers D2. The command generation unit 66h generates the control commands Ff1, Ff2, Fr1, and Fr2 to perform normal control on the first semi-active dampers D1 and the second semi-active dampers D2, which are provided to the trucks Tf and Tr. In this case, it is required that all the semi-active dampers D1 andD2 function as the semi-active dampers, and the sway restraining force FS and the yaw restraining force Fω are exerted with all the resultants of the four semi-active dampers D1 and D2. Hence, the command generation unit 66h adds the value obtained by multiplying the sway restraining force FS by 1/2 and the value obtained by multiplying the yaw restraining force Fω by 1/2, obtains the front control force Ftf, and generates the control commands Ff1 and Ff2 to perform normal control on the semi-active dampers D1 and D2 provided to the front truck Tf. Furthermore, the command generation unit 66h subtracts the value obtained by multiplying the yaw restraining force Fω by 1/2 from the value obtained by multiplying the sway restraining force FS by 1/2, obtains the rear control force Ftr, and generates the control commands Fr1 and Fr2 to perform normal control on the semi-active dampers D1 and D2 provided to the rear truck Tr. Hence, in the tunnel section, the front semi-active dampers D1 and D2 output the front control force Ftf obtained by adding the value obtained by multiplying the target yaw restraining fore Fωref by 1/4 and the value obtained by multiplying the target sway restraining force FSref by 1/4. Moreover, in the tunnel section, the rear semi-active dampers D1 and D2 output the rear control force Ftr obtained by subtracting the value obtained by multiplying the target sway restraining fore FSref by 1/4 from the value obtained by multiplying the target yaw restraining force Fωref by 1/4.

In order to, as indicated by the control commands Ff1, Ff2, Fr1, and Fr2, bring the semi-active dampers D1 and D2 to the unloaded state, or cause the semi-active dampers D1 and D2 to function as the passive dampers and the semi-active dampers and exert the damping forces as commanded in the case where the semi-active dampers D1 and D2 are caused to function as the dampers, the drive unit 66i obtains current commands required to be provided to the solenoids 9e and 39e of the first on-off valves 9 and 39, the solenoids 11e and 41e of the second on-off valves 11 and 41, and the proportional solenoids 22c and 52c of the variable relief valves 22 and 52, and outputs the current commands.

More specifically, when the control commands Ff1, Ff2, Fr1, and Fr2 cause the semi-active dampers D1 and D2 to function as the semi-active dampers, the drive unit 66i generates current commands according to the exertion directions and magnitudes of the damping forces of the semi-active dampers D1 and D2 from the control commands Ff1, Ff2, Fr1, and Fr2, and outputs the current commands. When the control commands Ff1 and Fr1 bring the first semi-active dampers D1 to the unloaded state, the drive unit 66i generates and outputs current commands to stop the energization of the first on-off valve 9, the second on-off valve 11, and the variable relief valve 22 . When the control commands Ff1, Ff2, Fr1, and Fr2 cause the semi-active dampers D1 and D2 to function as the passive dampers, the drive unit 66i closes the first on-off valves 9 and 39 and the second on-off valves 11 and 41, and generates and outputs current commands to pass current in such a manner as to have a designated amount of current through the variable relief valves 22 and 52.

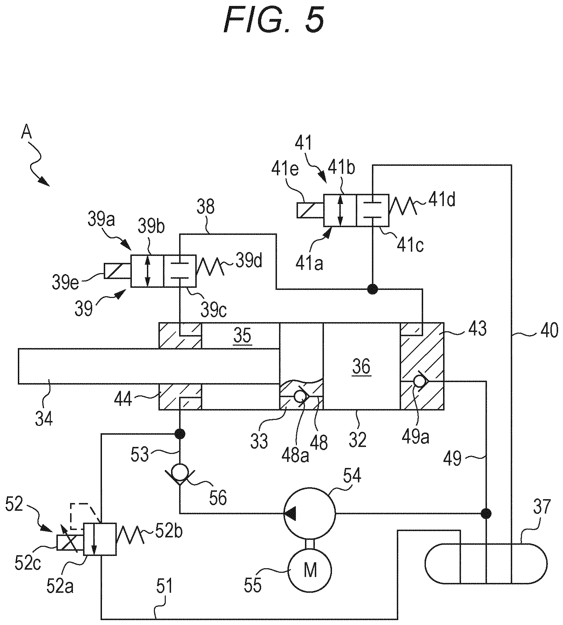

The railway vehicle vibration control apparatus 1 includes the first semi-active damper D1 that functions as the semi-active damper under normal control and enters the unloaded state upon non-energization, and the second semi-active damper D2 that functions as the semi-active damper under normal control and functions as the passive damper in the non-energized state. According to the railway vehicle vibration control apparatus 1 configured in this manner, if a large force is required, both of the first semi-active damper D1 and the second semi-active damper D2 exert force and, if a small force will do, only the second semi-active damper D2 exerts force. The first semi-active damper D1 enters the unloaded state upon non-energization. Therefore, if the exertion of a small force will do, the supply of current to the first semi-active damper D1 is not required at all, which does not at all influence the vibration control effect of the second semi-active damper D2. Hence, according to the railway vehicle vibration control apparatus 1, the amount of power consumed can be reduced without loss of the vibration control effect. Instead of the second semi-active damper D2, an actuator A (refer to Fig. 5) that functions as an actuator under normal control and functions as the passive damper in the non-energized state may be used.

In this case, the actuator A can also exert force in a direction where extension and contraction is encouraged in both of extension and contraction unlike the damper. Hence, the drive unit 66i obtains the control commands Ff2 and Fr2 to cause the actuator A to exert trust commanded by the front control force Ftf and the rear control force Ftr, irrespective of the direction as in the second semi-active damper D2.

As illustrated in Fig. 5, specifically, the actuator A is provided with, in addition to the configuration of the second semi-active damper D2, a supply passage 53 that causes the tank 37 and the rod-side chamber 35 to communicate with each other, and a pump 54 that is provided to the supply passage 53 and can suck the liquid in from the tank 37 and eject it toward the rod-side chamber 35, a motor 55 that drives the pump 54, and a check valve 56 that is provided on the rod-side chamber 35 side of the supply passage 53 with respect to the pump 54, and prevents backflow of the liquid from the rod-side chamber 35 to the pump 54.

The pump 54 is a pump that is driven by the motor 55 and ejects the liquid only in one direction. The outlet port of the pump 54 communicates with the rod-side chamber 35 through the supply passage 53, and the inlet port communicating with the tank 37 sucks the liquid in from the tank 37 and supplies it to the rod-side chamber 35.

The pump 54 simply ejects the liquid only in one direction and does not perform a switching operation in a rotation direction . Accordingly, the pump 54 has no problem at all such as a change in amount of ejection upon switching of rotation, and can use an inexpensive gear pump or the like. Furthermore, the rotation direction of the pump 54 is always the same. Accordingly, the motor 55 being a drive source that drives the pump 54 does not require high responsivity to the switching of rotation, either. Hence, an inexpensive one can be used accordingly as the motor 55.

The actuator A opens the first on-off valve 39 and closes the second on-off valve 41, and adjusts the valve opening pressure of the variable relief valve 52 to supply a predetermined amount of flow ejected from the pump 54 to the rod-side chamber 35, and exert thrust in the extension direction. The actuator A then exerts thrust in the extension direction of a value obtained by multiplying the valve opening pressure of the variable relief valve 52 by the cross-sectional area of the rod 34.

Conversely, the first on-off valve 39 is closed and the second on-off valve 41 is opened and the valve opening pressure of the variable relief valve 52 is adjusted to supply a predetermined amount of flow ejected from the pump 54 to the rod-side chamber 35 and cause the actuator A to exert thrust in the contraction direction. The actuator A then exerts thrust in the contraction direction of a value obtained by multiplying the valve opening pressure of the variable relief valve 52 by a value obtained by subtracting the cross-sectional area of the rod 34 from the cross-sectional area of the piston 33.

On the other hand, when the pump 54 is stopped, the check valve 56 causes the supply passage 53 to stop functioning. Accordingly, the actuator A achieves similar operation to the second semi-active damper D2. Hence, in the energized state, the actuator A functions as the actuator and can also function as the semi-active damper. Accordingly, the actuator A can also enter the unloaded state, and functions as the passive damper in the non-energized state.

An aspect is also possible in which such an actuator A that functions as the actuator under normal control and as the passive damper in the non-energized state is used instead of the second semi-active damper D2. Even if the railway vehicle vibration control apparatus 1 is configured in this manner, when a large force is required, both the first semi-active damper D1 and the actuator A exert force, and when a small force will do, only the actuator A exerts force. The first semi-active damper D1 enters the unloaded state upon non-energization. Accordingly, when the exertion of a small force will do, the supply of current to the first semi-active damper D1 is not required at all, which does not at all influence the vibration control effect of the actuator A. Hence, according to the railway vehicle vibration control apparatus 1, the amount of power consumed can be reduced without loss of the vibration control effect.

Furthermore, it may be configured in such a manner that when the railway vehicle travels in the open section, the first semi-active damper D1 is brought to the unloaded state and the second semi-active damper D2 or the actuator A undergoes normal control. When the railway vehicle vibration control apparatus 1 is configured in this manner, power consumption can be reduced during travel in the open section that occupies most of the line and needs a small force to control the vibration of the vehicle body B. Accordingly, the power consumption reduction effect is increased.

Moreover, it may be configured in such a manner that when the railway vehicle travels in the curved section, the first semi-active damper D1 is caused to function as the passive damper, and the second semi-active damper D2 or the actuator A undergoes normal control. When the railway vehicle vibration control apparatus 1 is configured in this manner, not only the second semi-active damper D2 or the actuator A but also the first semi-active damper D1 exerts the damping force as the passive damper in the curved section where the vibration of the vehicle body B is relatively larger than in a straight section. Hence, even in a situation where a large force is required to reduce the vibration of the vehicle body B during travel in the curved section, a sufficient force is exerted. The vibration of the vehicle body B can be reduced effectively, and the ride comfort of the railway vehicle can be improved.

Moreover, it may be configured in such a manner as to perform normal control on the first semi-active damper D1 and the second semi-active damper D2 or the actuator A when the railway vehicle travels in the tunnel section. In the railway vehicle vibration control apparatus 1, the first semi-active damper D1 also functions as the semi-active damper in addition to the normal control over the second semi-active damper D2 or the actuator A in the tunnel section where the vibration of the vehicle body B is relatively larger than in the strait and curved sections. Hence, if the first semi-active damper D1 and the second semi-active damper D2 are included, both of them function as the semi-active dampers having a high vibration control effect during travel in the tunnel section. The railway vehicle vibration control apparatus 1 can reduce the vibration of the vehicle body B effectively. Moreover, if the first semi-active damper D1 and the actuator A are included, the first semi-active damper D1 functions as the semi-active damper having a high vibration control effect, and the actuator A functions as an active suspension during travel in the tunnel section. Hence, with any configuration, the railway vehicle vibration control apparatus 1 exerts a high vibration control effect during travel in the tunnel section and can improve the ride comfort of the vehicle.

Furthermore, it may be configured in such a manner that when the speed V of the railway vehicle is equal to or less than the set speed, the first semi-active damper D1 is brought to the unloaded state, and the second semi-active damper D2 or the actuator A is caused to function as the passive damper. When the railway vehicle is stopping or travelling at low speeds, the vibration of the vehicle body B is also gentle. If the second semi-active damper D2 is caused to function as the passive damper, a sufficient vibration control effect can be obtained even if the first semi-active damper D1 is brought to the unloaded state. If the railway vehicle vibration control apparatus 1 is configured in this manner, when the speed V is equal to or less than the set speed, the supply of current to the first semi-active damper D1 and the second semi-active damper D2 is not required at all in whichever travel section. Accordingly, the amount of power consumed can be reduced without loss of the vibration control effect.

Moreover, the railway vehicle vibration control apparatus 1 of this example is configured in such a manner that a pair of the first semi-active damper D1, and the second semi-active damper D2 or the actuator A is mounted on each of the trucks Tf and Tr of the railway vehicle. If the railway vehicle vibration control apparatus 1 is configured in this manner, vibrations in the sway direction and the yaw direction can be reduced effectively in the front and rear parts of the vehicle body B.

Furthermore, the first semi-active damper D1 of this example includes the cylinder 2, the piston 3 inserted in the cylinder 2 in a slidable manner, the rod 4 inserted in the cylinder 2 and coupled to the piston 3, the rod-side chamber 5 and the piston-side chamber 6, which are divided by the piston 3 in the cylinder 2, the tank 7, the normally open first on-off valve 9 provided in the middle of the first passage 8 that causes the rod-side chamber 5 and the piston-side chamber 6 to communicate with each other, the normally open second on-off valve 11 provided in the middle of the second passage 10 that causes the piston-side chamber 6 and the tank 7 to communicate with each other, the discharge passage 21 that connects the rod-side chamber 5 to the tank 7, the variable relief valve 22 that is provided in the middle of the discharge passage 21 and can change the valve opening pressure, the inlet passage 19 that allows the liquid to flow through it only in the direction from the tank 7 to the piston-side chamber 6, and the rectification passage 18 that allows the liquid to flow through it only in the direction from the piston-side chamber 6 to the rod-side chamber 5. If being configured in this manner, the first semi-active damper D1 not only enters the unloaded state upon non-energization and can function as the semi-active damper in the energized state, but also can function as the passive damper in the energized state, and is most suitable for the railway vehicle vibration control apparatus 1.

Furthermore, the second semi-active damper D2 of this example includes the cylinder 32, the piston 33 inserted in the cylinder 32 in a slidable manner, the rod 34 inserted in the cylinder 32 and coupled to the piston 33, the rod-side chamber 35 and the piston-side chamber 36, which are divided by the piston 33 in the cylinder 32, the tank 37, the normally closed first on-off valve 39 provided in the middle of the first passage 38 that causes the rod-side chamber 35 and the piston-side chamber 36 to communicate with each other, the normally closed second on-off valve 41 provided in the middle of the second passage 40 that causes the piston-side chamber 36 and the tank 37 to communicate with each other, the discharge passage 51 that connects the rod-side chamber 35 to the tank 37, the variable relief valve 52 that is provided in the middle of the discharge passage 51 and can change the valve opening pressure, the inlet passage 49 that allows the liquid to flow through it only in the direction from the tank 37 to the piston-side chamber 36, and the rectification passage 48 that allows the liquid to flow through it only in the direction from the piston-side chamber 36 to the rod-side chamber 35. If being configured in this manner, the second semi-active damper D2 can function as the passive damper in the non-energized state, and as the semi-active damper in the energized state, and is most suitable for the railway vehicle vibration control apparatus 1.

Moreover, the actuator A of this example includes the cylinder 32, the piston 33 inserted in the cylinder 32 in a slidable manner, the rod 34 inserted in the cylinder 32 and coupled to the piston 33, the rod-side chamber 35 and the piston-side chamber 36, which are divided by the piston 33 in the cylinder 32, the tank 37, the normally closed first on-off valve 39 provided in the middle of the first passage 38 that causes the rod-side chamber 35 and the piston-side chamber 36 to communicate with each other, the normally closed second on-off valve 41 provided in the middle of the second passage 40 that causes the piston-side chamber 36 and the tank 37 to communicate with each other, the pump 54 that supplies the liquid from the tank 37 to the rod-side chamber 35, the discharge passage 51 that connects the rod-side chamber 35 to the tank 37, the variable relief valve 52 that is provided in the middle of the discharge passage 51 and can change the valve opening pressure, the inlet passage 49 that allows the liquid to flow through it only in the direction from the tank 37 to the piston-side chamber 36, and the rectification passage 48 that allows the liquid to flow through it only in the direction from the piston-side chamber 36 to the rod-side chamber 35. If being configured in this manner, the actuator A can function as the passive damper in the non-energized state, and as the active suspension in the energized state, and is most suitable for the railway vehicle vibration control apparatus 1. Moreover, the actuator A can be realized with the addition of the pump 54 to the configuration of the second semi-active damper D2. Accordingly, commonality of parts of the second semi-active damper D2 and the actuator A is promoted to facilitate a change to the railway vehicle on the basis of compatibility between them. Hence, a replacement by the actuator A can also be made to the railway vehicle with the second semi-active damper D2 on by adding a pump unit holding the pump 54 to the second semi-active damper D2.

This application claims priority to JP 2015-153236 A filed on August 3, 2015 with Japan Patent Office, the entire content of which is incorporated by reference in the description.

## Claims

1. A railway vehicle vibration control apparatus comprising:
a first semi-active damper interposed between a vehicle body and a truck of a railway vehicle and configured to function as a semi-active damper under normal control and enter an unloaded state upon non-energization; and
a second semi-active damper or an actuator interposed between the vehicle body and the truck of the railway vehicle, the second semi-active damper being configured to function as a semi-active damper under normal control and as a passive damper in a non-energized state, the actuator being configured to function as an actuator under normal control and as a passive damper in the non-energized state.

2. The railway vehicle vibration control apparatus according to claim 1, wherein
when the railway vehicle travels in an open section,
the first semi-active damper is brought to the unloaded state, and
the second semi-active damper or the actuator undergoes normal control.

3. The railway vehicle vibration control apparatus according to claim 1, wherein
when the railway vehicle travels in a curved section, the first semi-active damper is caused to function as the passive damper, and
the second semi-active damper or the actuator undergoes normal control.

4. The railway vehicle vibration control apparatus according to claim 1, wherein
when the railway vehicle travels in a tunnel section,
the first semi-active damper undergoes normal control, and
the second semi-active damper or the actuator undergoes normal control.

5. The railway vehicle vibration control apparatus according to claim 1, wherein
upon the speed of the railway vehicle is equal to or less than a set speed,
the first semi-active damper is brought to the unloaded state, and
the second semi-active damper or the actuator is caused to function as the passive damper.

6. The railway vehicle vibration control apparatus according to claim 1, wherein
a pair of the first semi-active damper, and the second semi-active damper or actuator is mountedper truck of the railway vehicle.

7. The railway vehicle vibration control apparatus according to claim 1, wherein the first semi-active damper includes:
a cylinder;
a piston inserted in the cylinder in a slidable manner;
a rod inserted in the cylinder and coupled to the piston;
a rod-side chamber and a piston-side chamber, which are divided by the piston in the cylinder;
a tank;
a normally open first on-off valve provided in the middle of a first passage causing the rod-side chamber and the piston-side chamber to communicate with each other;
a normally open second on-off valve provided in the middle of a second passage causing the piston-side chamber and the tank to communicate with each other;
a discharge passage connecting the rod-side chamber to the tank;
a variable relief valve provided in the middle of the discharge passage and configured to be capable of changing a valve opening pressure;
an inlet passage configured to allow liquid to flow therethrough only in a direction from the tank to the piston-side chamber; and
a rectification passage configured to allow the liquid to flow therethrough only in a direction from the piston-side chamber to the rod-side chamber.

8. The railway vehicle vibration control apparatus according to claim 1, wherein the second semi-active damper includes:
a cylinder;
a piston inserted in the cylinder in a slidable manner;
a rod inserted in the cylinder and coupled to the piston;
a rod-side chamber and a piston-side chamber, which are divided by the piston in the cylinder;
a tank;
a normally closed first on-off valve provided in the middle of a first passage causing the rod-side chamber and the piston-side chamber to communicate with each other;
a normally closed second on-off valve provided in the middle of a second passage causing the piston-side chamber and the tank to communicate with each other;
a discharge passage connecting the rod-side chamber to the tank;
a variable relief valve provided in the middle of the discharge passage and configured to be capable of changing a valve opening pressure;
an inlet passage configured to allow liquid to flow therethrough only in a direction from the tank to the piston-side chamber; and
a rectification passage configured to allow the liquid to flow therethrough only in a direction from the piston-side chamber to the rod-side chamber.

9. The railway vehicle vibration control apparatus according to claim 1, wherein the actuator includes:
a cylinder;
a piston inserted in the cylinder in a slidable manner;
a rod inserted in the cylinder and coupled to the piston;
a rod-side chamber and a piston-side chamber, which are divided by the piston in the cylinder;
a tank;
a normally closed first on-off valve provided in the middle of a first passage causing the rod-side chamber and the piston-side chamber to communicate with each other;
a normally closed second on-off valve provided in the middle of a second passage causing the piston-side chamber and the tank to communicate with each other;
a pump configured to supply liquid from the tank to the rod-side chamber;
a discharge passage connecting the rod-side chamber to the tank;
a variable relief valve provided in the middle of the discharge passage and configured to be capable of changing a valve opening pressure;
an inlet passage configured to allow the liquid to flow therethrough only in a direction from the tank to the piston-side chamber; and
a rectification passage configured to allow the liquid to flow therethrough only in a direction from the piston-side chamber to the rod-side chamber.
